Europäisches Patentamt

(19) European Patent Office

Office européen des brevets

(11) Numéro de publication: **0 120 495**
**B1**

(12) **FASCICULE DE BREVET EUROPÉEN**

(45) Date de publication du fascicule du brevet:
10.06.87

(21) Numéro de dépôt: **84103339.2**

(22) Date de dépôt: **27.03.84**

(51) Int. Cl.⁴: **H 04 Q 11/04,** H 04 Q 3/54,
H 04 L 11/16

(54) **Dispositif d'échange de messages codés entre stations.**

(30) Priorité: **29.03.83 FR 8305124**

(43) Date de publication de la demande:
**03.10.84 Bulletin 84/40**

(45) Mention de la délivrance du brevet:
**10.06.87 Bulletin 87/24**

(84) Etats contractants désignés:
**BE CH DE FR GB IT LI NL SE**

(56) Documents cité:
EP-A-0 022 170
FR-A-2 455 838

PATENTS ABSTRACTS OF JAPAN, vol. 6, no. 96 (P-120) 974 , 4 juin 1982
ELECTRONICS INTERNATIONAL, vol. 54, no. 12, juin 1981, pages 176-181, New York, US; D. SCAVEZZE: "Nodes sound off to control access to local network"
21st IEEE COMPUTER SOCIETY INTERNATIONAL CONFERENCE, COMPCON 80, 23-25 septembre 1980, Washington, D.C., pages 261,267, IEEE, New York, US; H.S. AL-KHATIB et al.: "The extended ethernet: EE-net"
COLLOQUE INTERNATIONAL DE COMMUTATION, 7-11 mai 1979, Paris, session 30 B 2, pages 608-614,, FR; F. ANCEAU et al.: "Projet d'architecture pour la commande d'un autocommutateur téléphonique"

(73) Titulaire: **ALCATEL CIT, 33, rue Emeriau, F-75015 Paris (FR)**

(72) Inventeur: **Pelotte, André, AR CRESC'H- SERVEL, F-22300 Lannion (FR)**

(74) Mandataire: **Weinmiller, Jürgen, Lennéstrasse 9 Postfach 24, D-8133 Feldafing (DE)**

(56) Documents cité: (suite)
**PROCEEDINGS OF THE IEEE, vol. 65, no. 9, septembre 1977, pages 1323-1329, IEEE, New York, US; N. JOVIC et al.: "Interprocessor communication in systems with distributed control"
INFORMATION PROCESSING 77, PROCEEDINGS OF IFIP CONGRESS 77, 8-12 août 1977, Toronto, pages 431-436, North-Holland Publishing Company, Amsterdam, NL; E.H. ROTHAUSER et al.: "Milma - A collision-free multi-access method"
IEEE INTERNATIONAL CONFERENCE ON COMMUNICATIONS, 17-19 juin 1974, Minneapolis, Minnesota, session 21 F, pages 1-10, IEEE, New York, US; A.G. FRASER: "Spider - An experimental data communications system"**

## Description

L'invention concerne l'échange de messages codés entre stations et notamment, mais non exclusivement, entre des organes de commande d'un central de commutation temporelle.

Il existe des systèmes d'échange de messages codés entre stations qui travaillent en temps partagé. Ces stations sont, par exemple, des calculateurs de dispositifs de réception et d'émission de données, et d'une manière générale des dispositifs de traitement de données. Dans de tels systèmes d'échange de messages, un message d'un rang de priorité supérieure à d'autres messages prend le pas sur eux, ce qui nécessite des dispositions particulières onéreuses et compliquées.

On connaît, par la demande de brevet français 2 455 838 un système d'échange de messages codés entre stations. Dans un tel système chaque station comporte un module de liaison relié à un bus de signalisation et à un bus d'informations qui sont des bus série synchronisés par une base de temps commune à toutes les stations, chaque module de liaison ayant, dans une trame de signalisation, un créneau de temps réservé constitué par deux voies temporelles consécutives, une voie paire et une voie impaire. Les bus de signalisation et d'information ont un débit de 1,28 Mbits/s, les informations étant acheminées dans 32 voies d'une trame de 125 microsecondes, chaque voie étant subdivisée en 5 intervalles. La longueur des messages est fixe et limitée à 157 éléments binaires. Dans ce système le nombre de stations interconnectées est au maximum de 15, et la priorité des stations sur le bus d'informations est fixe, la station numéro 1 ayant la priorité maximale, ce qui signifie qu'en fin d'échange de message émis par une station n, on redémarre en début de trame du bus signalisation par la station 1, puis la station 2 si la station 1 n'est pas demandeur, et ainsi de suite jusqu'à la première station qui est en position demandeur sur le bus signalisation.

Dans un tel système d'échange le nombre de stations est donc limité, les messages ont un format fixe et une longueur limitée, et la priorité d'accès des stations au bus d'information est fixe.

Il en résulte qu'un tel système d'échange présente des contraintes qui limitent ou excluent son emploi.

L'invention a donc pour but un dispositif d'échange de messages codés entre les stations ne présentant pas les inconvénients du système d'échange connu.

La présente invention a pour objet un dispositif d'échange de messages codés entre stations reliées entre elles par une liaison de signalisation et une liaison d'informations, chaque station étant reliée à une base de temps générale et comportant une unité de commande et un coupleur relié d'une part à l'unité de commande par un bus d'adresses et un bus de données et d'autre part aux liaisons de signalisation et d'informations qui sont des liaisons multiplex série synchrones de la base de temps, un intervalle de temps dans une trame de signalisation étant affecté à chaque station, le coupleur ayant des moyens pour émettre son état dans son intervalle de temps, un circuit récepteur de signalisation, une mémoire d'état des stations, une mémoire de réception des messages, une mémoire d'émission des messages, un circuit de sortie relié à la liaison d'informations, un circuit émetteur de signalisation, et des moyens pour élaborer un signal correspondant à l'intervalle de temps d'une station appelante, les échanges de messages codés entre stations se faisant par messages transitant sur la liaison d'informations dans des trames d'informations, chaque trame d'informations ayant la même durée qu'une trame de signalisation, caractérisé par le fait que les messages à émettre ont des longueurs différentes et sont contenus dans un nombre entier de trames d'informations, et que le coupleur comporte également:

- des moyens pour afficher et décompter le nombre de trames d'informations du message à émettre et des moyens pour delivrer un signal lorsque le nombre de trames d'informations à émettre est égal à zero,

- des moyens pour élaborer dans son intervalle de temps un signal de réservation d'une durée d'une trame d'informations, et des moyens pour émettre, à partir du signal de réservation et dans son intervalle de temps, un bit de réservation sur la liaison de signalisation,

- des moyens pour élaborer un signal correspondant à l'intervalle de temps d'une station appelée, et des moyens pour émettre sur la liaison de signalisation un bit d'appel dans l'intervalle de temps de la station appelée,

- des moyens pour élaborer à la fin de la trame de signalisation dans laquelle le signal de réservation à été émis, un signal créneau de temps à l'émission pour d'une part activer par des moyens d'activation et tant que le nombre de trames d'informations à émettre n'est pas nul, les moyens d'élaboration du signal de réservation afin d'émettre à nouveau un bit de réservation et un bit d'appel, et pour d'autre part activer les moyens de décomptage, des moyens d'adressage de la mémoire d'émission et un circuit d'émission du message, et

- des moyens pour élaborer un signal créneau de temps en fin d'émission à partir du signal créneau de temps à l'émission, et activer dans son intervalle de temps le circuit d'émission pour émission d'un bit d'imparité à la suite du message.

L'invention va être décrite ci-après à l'aide d'un exemple non limitatif de réalisation illustré par les figures annexées dans lesquelles:

- la figure 1 représente schématiquement un dispositif d'échanges de messages entre stations de l'invention,

- la figure 2 représente schématiquement une station de la figure 1,

- la figure 3 est un schéma d'un émetteur de signalisation d'une station,
- la figure 4 est un schéma d'un récepteur de signalisation d'une station,
- la figure 5 est un schéma d'un récepteur d'informations d'une station,
- la figure 6 est un schéma d'un émetteur d'informations d'une station,
- la figure 7 représente différents signaux utilisés dans les émetteurs et récepteurs de signalisation et d'informations.

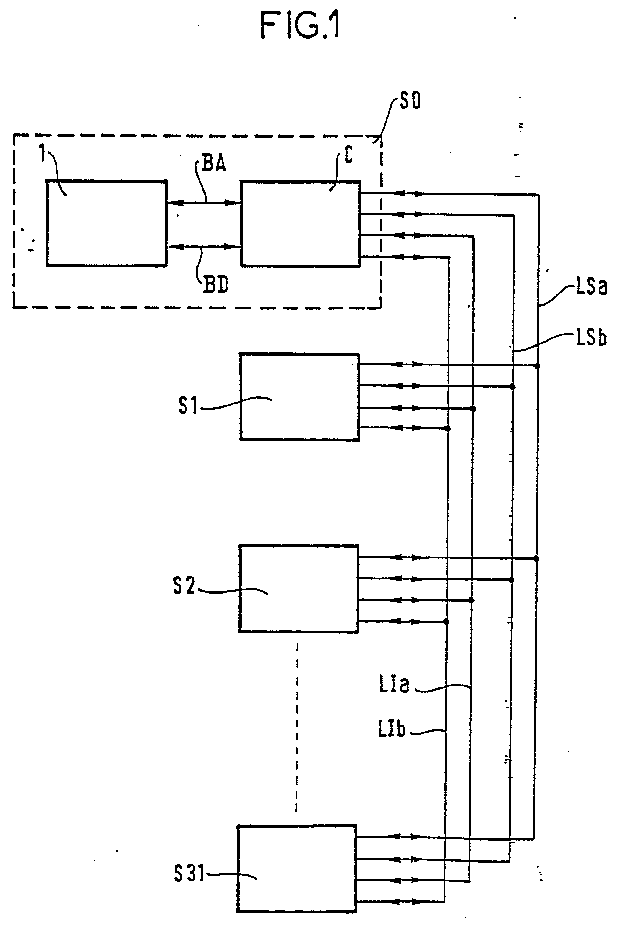

La figure 1 représente schématiquement un dispositif d'échange entre stations; dans cette figure S0, S1, S2,...S31 sont des stations reliées entre elles par un bus d'échanges constitué par une liaison de signalisation bidirectionnelle et une liaison d'information bidirectionnelle. Il y a deux liaisons de signalisation LSa et LSb et deux liaisons d'informations LIa et LIb pour des raisons de sécurité.

Chaque station comporte une unité de commande 1 et un coupleur C jouant le rôle d'interface entre l'unité de commande et les liaisons de signalisation et d'informations. Un bus d'adresses BA et un bus de données BD qui sont des bus bidirectionnels, relient l'unité de commande et le coupleur.

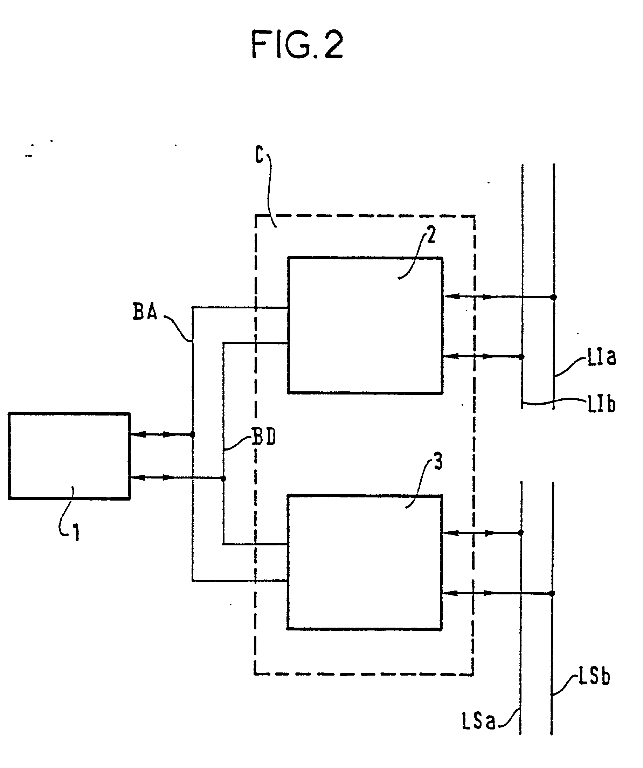

La figure 2 représense schématiquement une station de la figure 1, toutes les stations étant identiques et reliées à une base de temps générale, non représentée.

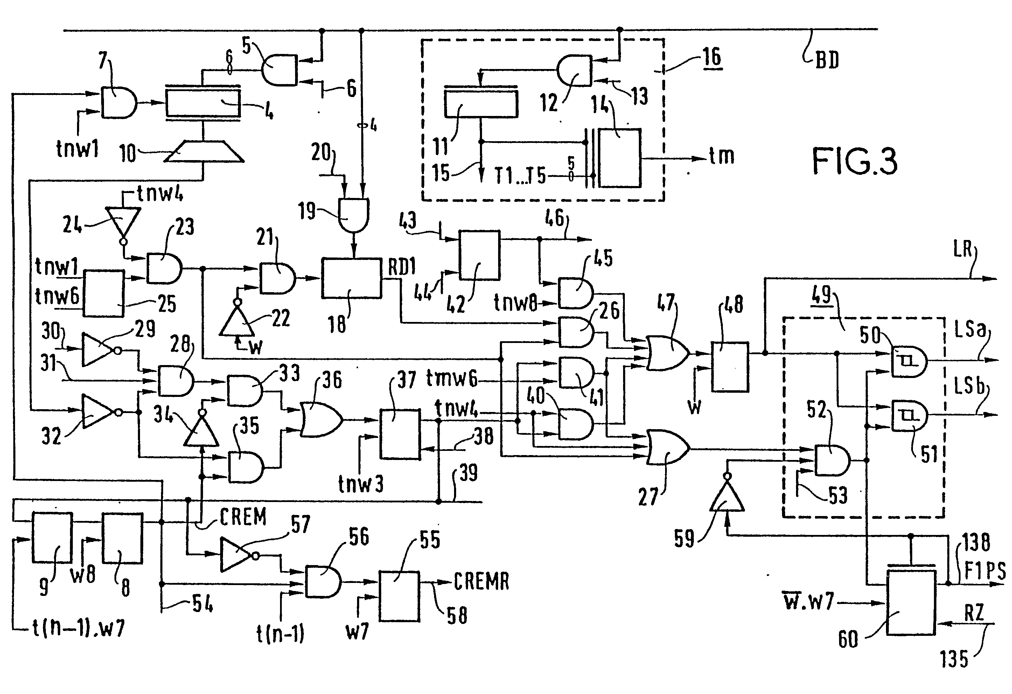

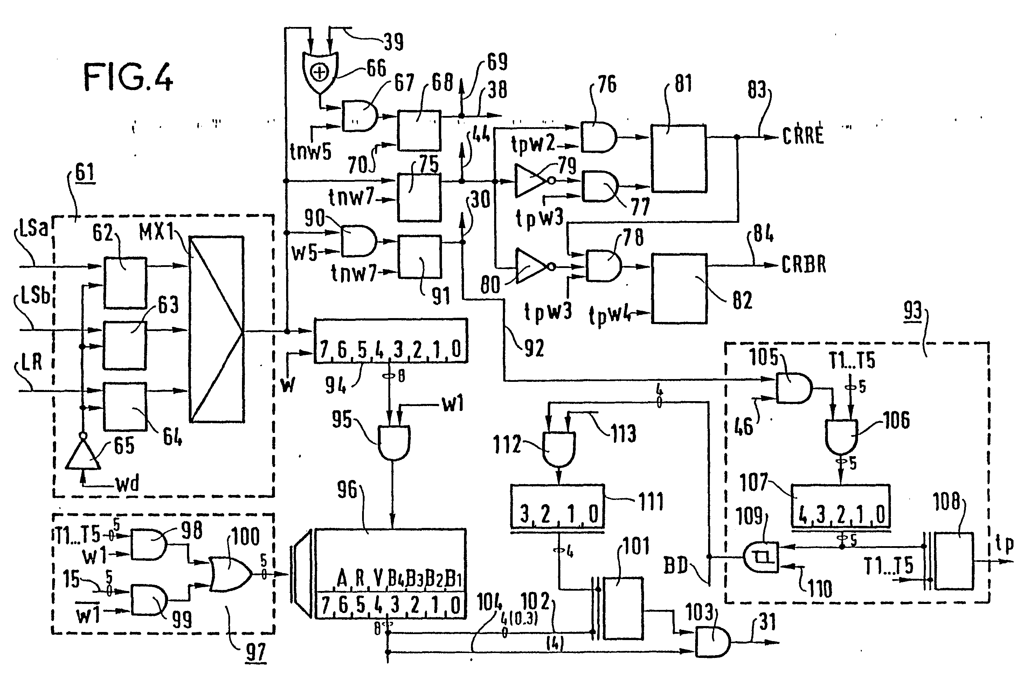

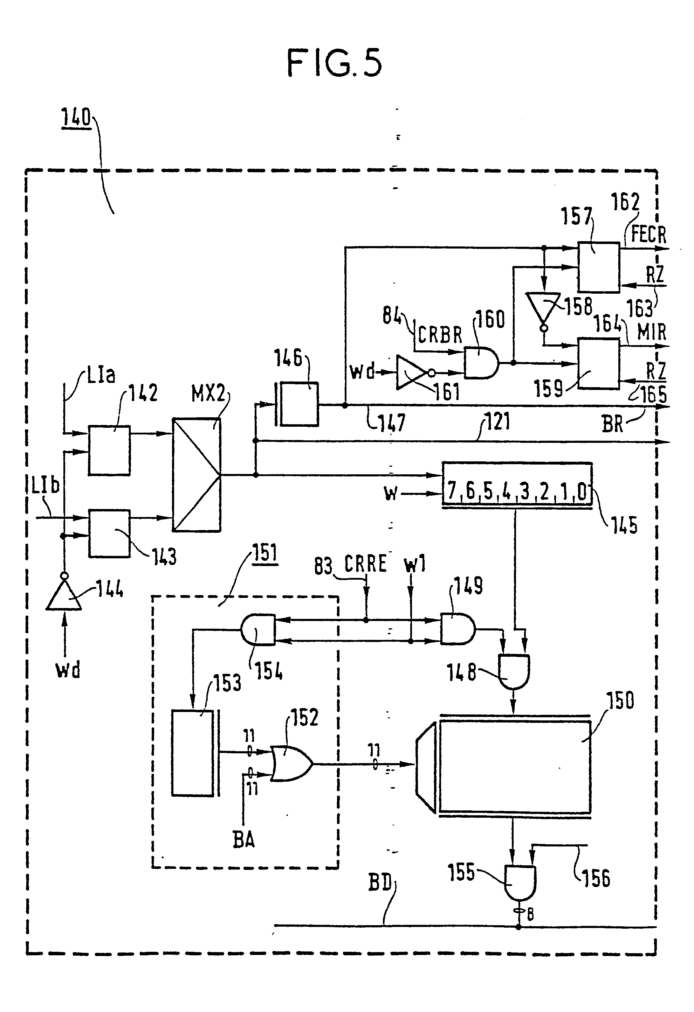

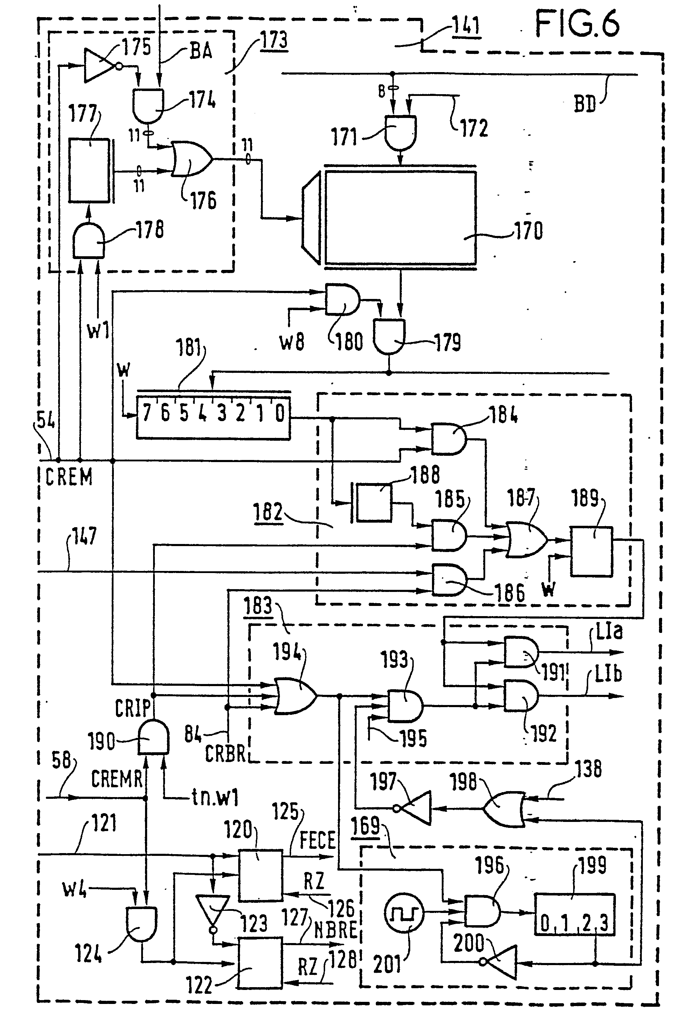

Une station comporte l'unité de commande 1 qui assure la fonction pour laquelle elle est conçue, et le coupleur C constitué par un module émetteur-récepteur d'informations 2 relié aux deux liaisons d'informations LIa et LIb, et par un module émetteur-récepteur de signalisation 3 relié aux deux liaisons de signalisation LSa et LSb. Chaque module émetteur-récepteur de signalisation comporte un émetteur et un récepteur de signalisation représentés figures 3 et 4, respectivement; chaque module émetteur-récepteur d'informations comporte un émetteur et un récepteur d'informations comme représenté figures 6 et 5 respectivement.

Le dispositif d'échange entre stations de l'invention permet d'interconnecter 32 stations par l'intermédiaire du bus d'échanges constuté par une liaison d'information et une liaison de signalisation, qui sont des liaisons série, et synchronisé par un signal d'horloge W; les échanges se font à la cadence W (2,048 Mbits) poids faible en tête. Chaque station possède son propre numéro de station sur le bus d'échanges qui permet tous les dialogues entre couples de stations, les stations étant numérotées de 0 à 31.

Les échanges entre stations se font par messages transitant sur la liaison d'informations après que cette liaison ait été réservée pour la durée du message grâce à une procédure veille-appel préalable sur la liaison de signalisation.

Les messages sont emis a la cadence de 2,048 Mbits/s et ont une durée variable dans la limite de 1 à 2048 octets, la réservation de la liaison d'informations étant faite pour un nombre entier de trames suffisant pour véhiculer le message.

Chaque liaison d'informations et de signalisation est dupliquée pour des raisons de défense. Une information est toujours émise en parallèle sur les deux liaisons d'informations pour les messages, ou sur les deux liaisons de signalisation pour la signalisation (procédure veille-appel), le choix de la liaison "écoutée" étant fait par chaque station réceptrice en fonction de la qualité de la réception. Chaque station effectue elle-même la détection d'état actif permanent qu'elle peut provoquer sur chaque liaison et assure son propre isolement en cas de défaillance.

Chaque station est connectée à la liaison de signalisation, et dispose sur cette liaison d'un intervalle de temps de 3,9 microsecondes dans une trame de 125 microsecondes permettant le dialogue des 32 stations.

Cet intervalle de temps permet à chaque station: l'émission de quatre bits d'état B 1, B 2, B 3, B 4 et d'un bit de veille V, l'échange avec une autre station de deux bits de protocole R et A, qui sont un bit de réservation R et un bit d'appel A, et l'utilisation d'un bit de test T qui sera utilisé pour vérifier l'absence d'émission permanente par la station sur la liaison de signalisation. L'ensemble de ces huit bits constitue un octet de signalisation qui est reçu et memorise dans une mémoire d'état présente dans chaque station.

La trame de signalisation, d'une durée de 125 microsecondes est divisée en 32 intervalles de temps de 3,9 microsecondes chacun. Chaque intervalle de temps est subdivisé en huit temps élémentaires W1 à W8. Un intervalle de temps est affecté à chaque station. Lors de l'intervalle de temps tn qui lui est affecté une station n émet, sur la liaison de signalisation, des informations dans les temps élémentaires.

Les informations échangées sur la liaison de signalisation sont les suivantes:
- en tn.W1, tn.W2, tn.W3, et tn.W5, la station n émet ses quatre bits d'états, B 1 à B 4,
- en tn.W4 la station n émet un bit de réservation R. Les conditions d'émission de ce bit seront précisées ultérieurement,
- en tn.W8 la station n émet un bit donnant sont état de veille à l'émission; ce bit a la valeur 1 lorsque la station est disponible.
- en tn.W6 la station n reçoit un bit d'appel An émis par une station appelante à ce temps tn.W6 de la station appelée. De même la station appelle une station m par émission d'un bit d'appel Am qu'elle émet au temps tm.W6, c'est-à-dire dans l'intervalle de temps tm de la station appelée. Dans une station appelée la reception du bit d'appel prépare celle-ci à se mettre en réception lors de l'intervalle de temps tn suivant, correspondant à la station appelante,
- en tn.W7 émission d'un bit de test pour vérifier l'absence d'émission permanente par la station sur la liaison de signalisation.

L'échange de message, sur la liaison d'informations commence en effet dès le début de l'intervalle de temps tn suivant l'envoi du bit de réservation, c'est-à-dire pratiquement 125 microsecondes après la réservation de la liaison signalisation par la station n. Le bit de réservation R est reçu par chaque station qui est ainsi informée de l'état d'occupation de la liaison de signalisation.

Dans la description qui va suivre on désignera par station n une station quelconque dont les figures 3 à 6 représentent les circuits constituant le coupleur de la figure 2, par station m une station appelée par la station n, et par station p une station appelant la station n. Les intervalles de temps affectés aux stations n, m et p sont désignés par tn, tm, et tp, respectivement.

La figure 3 représente, pour une station n, l'émetteur du module émetteur-récepteur de signalisation 3 de la figure 2. Un décompteur 4, à 6 bits reçoit de l'unité de commande de la station, et par le bus de données BD, le nombre de trames à émettre sur la liaison d'informations; ce nombre de trames est appliqué à une entrée d'une porte ET 5 dont une autre entrée reçoit par un fil 6, un signal d'écriture de l'unité de commande. Le décompteur 4 a son entrée horloge relié à la sortie d'une porte ET 7 dont une entrée reçoit un signal tn.W1 et une autre entrée est reliée à la sortie d'une bascule 8 pilotée par un signal d'horloge W8. La bascule 8 est reliée en entrée à la sortie d'une bascule 9 pilotée par un signal d'horloge t (n-1).W7; la bascule 9 reçoit en entrée un signal de réservation dont l'élaboration sera indiquée plus tard. La bascule 8 délivre un signal qui est un créneau de temps à l'émission. Le décompteur 4 est relié en sortie à un décodeur 10 qui délivre un signal lorsque le décompteur est à zéro, ce signal apparaissant au début de la dernière trame à émettre. Un circuit numéro de station appelée 16 délivre un créneau de temps tm correspondant à l'intervalle de temps affecté à la station appelée. Il comprend un registre 11, qui reçoit du bus de données BD le numéro codé sur 5 bits d'une station appelée, par l'intermédiaire d'une porte ET 12 recevant sur une autre entrée, et par le fil 13, un signal d'écriture de l'unité de commande de la station n. La sortie du registre 11 est reliée à une entrée d'un comparateur 14 dont une autre entrée reçoit des signaux T1 à T5 qui permettent de définir les intervalles de temps t0, t1,....t31. Ces signaux bien connus sont les suivants:

- T1 a une durée de 3,9 microsecondes et une période de 7,8 microsecondes,
- T2 a une durée de 7,8 microsecondes, une période de 15,6 microsecondes et un décalage de 3,9 microsecondes par rapport au signal T1,
- T3 a une durée de 15,6 microsecondes, une période de 31,25 microsecondes et un décalage de 7,8 microsecondes par rapport au signal T2,
- T4 a une durée de 31,25 microsecondes, une période de 62,4 microsecondes et un décalage de 15,6 microsecondes par rapport au signal T3,
- T5 a une durée de 62,5 microsecondes, une période de 125 microsecondes et un décalage de 31,2 microsecondes par rapport au signal T4.

La comparaison entre les cinq bits du numéro de la station appelée et les signaux T1 à T5 donne en sortie du comparateur 14 un signal tm qui correspond à l'intervalle de temps affecté à la station appelée m.

La sortie du registre 11 est reliée à un fil 15 permettant d'acheminer le numéro de la station appelante vers le récepteur du module émetteur-récepteur de signalisation, figure 4.

Les quatre bits d'états de la station n sont chargés dans un registre d'états 18, du type à décalage, relié au bus de données BD par l'intermédiaire d'une porte ET 19 validée par un signal délivré par l'unité de commande sur le fil 20. Le registre d'états 16 est à chargement en parallèle et à décalage en sortie. Le décalage, donc la lecture du registre d'états 18, est commandé par une porte ET 21 ayant une entrée relié à un inverseur 22 auquel est appliqué le signal W de 244 nanosecondes de durée et de 488 nanosecondes de période, et une autre entrée reliée à la sortie d'une porte ET 23; une entrée de la porte ET 23 est reliée à un inverseur 24 recevant en entrée un signal tn.W4, et une autre entrée est reliée à la sortie d'un point mémoire 25 recevant sur son entrée le signal tn.W1 et sur son entrée de remise à zéro le signal tn.W6. Le registre d'états 18 délivre donc les 4 bits d'états de la station n aux temps tn.W1, tn.W2, tn.W3 et tn.W5.

La sortie du registre d'états 18 est reliée à une entrée d'une porte ET 26 dont une autre entrée est reliée d'une part à la sortie de la porte ET 23 et d'autre part à l'entrée d'une porte OU 27. Une porte ET 28 à trois entrées a une première entrée reliée à la sortie d'un inverseur 29 ayant son entrée reliée par un fil 30 au récepteur (figure 4) du module émetteur récepteur de signalisation, et reçoit un signal de réservation indiquant si la liaison de signalisation est ou non réservée par une autre station; ce signal de réservation à la valeur 1 si la liaison de signalisation est déjà réservée, et la valeur 0 si elle est libre. Une deuxième entrée de la porte ET 28 est reliée par un fil 31 au récepteur du module émetteur-récepteur de signalisation, et reçoit un signal récepteur en veille, de valeur 1 si le récepteur est en veille et de valeur 0 dans le cas contraire. Une troisième entrée de la porte ET 28 est reliée à la sortie d'un inverseur 32 ayant sont entrée reliée à la sortie du décodeur 10 duquel il reçoit un signal de valeur 0 tant que le nombre de trames à émettre est différent de zéro.

Une porte ET 33 a une entrée reliée à la sortie de la porte ET 28 et une autre entrée reliée, à travers un inverseur 34 à la sortie de la bascule 8. Une porte ET 35 a une entrée reliée à la sortie de l'inverseur 32 et une autre entrée reliée à la sortie de la bascule 8. Une porte OU 36 a une entrée reliée à la sortie de la porte ET 33 et une autre entrée reliée à la sortie de la porte ET 35. Une bascule 37 a son entrée reliée à la sortie de la porte OU 36 et reçoit sur son entrée horloge le signal tn.W3; son entrée de remise à zéro est reliée par un fil 38 au récepteur (figure 4) du module émetteur-récepteur de signalisation duquel elle reçoit un signal faute de bit de réservation. La sortie de la bascule 37 est reliée par un fil 39 d'une part à l'entrée de\la bascule 9 et d'autre part au récepteur (figure 4) du module émetteur-récepteur de signalisation; la sortie de la bascule 37 est également reliée d'une part à une entrée d'une porte ET 40 recevant sur une autre entrée un signal tn.W4, et d'autre part à une entrée d'une porte ET 41 recevant sur une autre entrée un signal tm.W6 correspondant au bit 6 de l'intervalle de temps affecté à la station m appelée. La sortie de la porte ET 41 est reliée à une entrée de la porte OU 27 dont une autre entrée reçoit le signal tn.W4.

Un point mémoire 42 a son entrée signal reliée par un fil 43 à l'unité de commande et en reçoit un signal de valeur 1 lorsque la station n veut émettre sur la liaison d'informations; l'entrée de remise à zéro du point mémoire est relié par un fil 44 au récepteur du module émetteur-récepteur de signalisation, et reçoit un signal lorsque la station n reçoit un bit d'appel émis par une station appelante qui appelle la station n. La sortie de la bascule 42 est reliée d'une part à une entrée d'une porte ET 45 recevant sur une autre entrée un signal tn.W8 pour émission du bit de veille à l'émission de la station n, et d'autre part, par un fil 46, au récepteur du module émetteur-récepteur de signalisation.

Une porte OU 47 a quatre entrées reliées respectivement à la sortie des portes ET 26, 40, 41 et 45, sa sortie étant reliée à l'entrée signal d'une bascule 48 recevant sur son entrée horloge le signal W. Un circuit émetteur de signalisation 49 est relié en entrée à la sortie de la bascule 48 et à la sortie de la porte OU 27. Ce circuit émetteur comporte trois portes ET 50, 51, 52; la porte ET 50 a une entrée reliée à la sortie de la bascule 48 et une autre entrée reliée à la sortie de la porte ET 52; la porte ET 51 a une entrée reliée à la sortie de la bascule 48 et une entrée reliée à la sortie de la porte ET 52; la porte ET 52 a une entrée reliée à la sortie de la porte OU 27 et une entrée reliée par un fil 53 à l'unité de commande de laquelle elle reçoit un signal de validation de la signalisation. La porte ET 52 a également une autre entrée reliée à travers un inverseur 59 à la sortie d'une bascule 60 ayant une entrée signal reliée à la sortie de la porte ET 52 et recevant un signal W̄.W7 sur son entrée horloge; la sortie de la bascule 60 est reliée d'une part à une entrée de mémorisation de la bascule et d'autre part à un fil 138; l'entrée de remise à zéro de la bascule 60 est relié par un fil 135 à l'unité de commande. La porte ET 52 est validée pendant le temps tn, à l'exception du temps tn.W7 qui n'est pas utilisé dans la procédure d'échange si le signal délivré par la porte OU 27 est correct; si ce signal comporte le bit correspondant à W7 la bascule 60 délivre un signal de faute F1PS et bloque la porte ET 52 par l'intermédiaire de l'inverseur 59.

La sortie de la porte ET 50 est reliée à la liaison de signalisation LSa, et la sortie de la porte ET 51 est reliée à la liaison de signalisation LSb. La sortie de la bascule 48 est également reliée, par une liaison de rebouclage LR au récepteur du module émetteur-récepteur de signalisation.

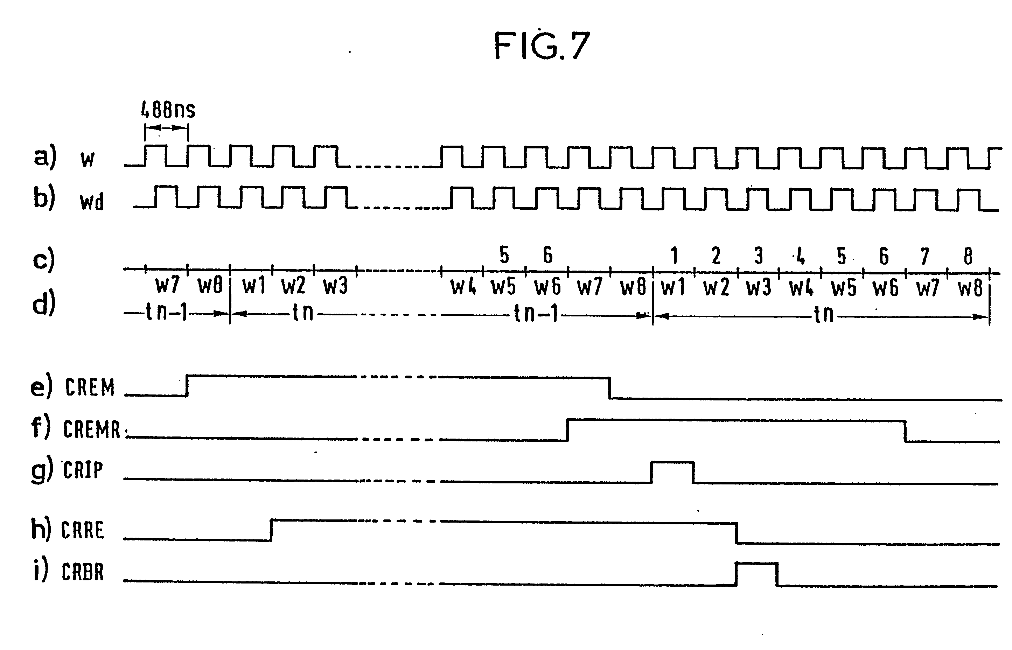

La bascule 9, est reliée en entrée à la sortie de la bascule 37 qui délivre au temps tn.W3 un signal de réservation lorsque la station n veut réserver les liaisons de signalisation et d'informations; l'entrée horloge de la bascule 9 reçoit un signal t (n-1).W7. La sortie de la bascule 9 est reliée à l'entrée de la bascule 8 dont l'entrée horloge reçoit un signal W8. La bascule 8 délivre un signal "créneau de temps à l'émission" CREM dont la durée est comprise entre 1 et 64 trames, cette durée étant fonction de la longueur du message à émettre par la station n, la longueur du message étant fournie par l'unité de commande au décompteur 4. La sortie de la bascule 8 est également reliée, par un fil 54 au module émetteur-récepteur d'informations (figure 5). Le signal créneau de temps à l'émission CREM délivré par la bascule 8 (fil 54) débute donc au temps t (n-1).W8, pratiquement 125 microsecondes après l'envoi du bit de réservation par la station n, et se termine après un certain nombre entier de trames en t (n-1).W7, comme représenté figure 7.

Une bascule 55 a une entrée signal reliée à la sortie d'une porte ET 56 ayant une entrée reliée à travers un inverseur 57 à la sortie de la bascule 37, une entrée reliée à la sortie de la bascule 8, et recevant sur une autre entrée le signal t (n-1); la bascule 55 reçoit sur son entrée horloge le signal W7 et délivre en sortie, sur un fil 58, un signal CREMR qui est un créneau de temps en fin d'émission. Ce signal CREMR prend la valeur 1 au temps t (n-1).W7 de la dernière trame émise puisque le signal de réservation délivré par la bascule 37 est nul depuis le temps tn.W3 de cette dernière trame; le signal CREMR a la valeur 1 jusqu'au temps tn.W7 où il reprend une valeur nulle, comme représenté figure 7, puisque le signal CREM s'est annulé en t (n-1).W8.

La figure 4 représente le récepteur du module émetteur-récepteur de signalisation. Un circuit récepteur de signalisation 61 est constitué d'un multiplexeur MX1 et de trois bascules 62, 63, 64. L'entrée signal de la bascule 62 est reliée à la liaison de signalisation LSa, l'entrée signal de la bascule 63 est reliée à la liaison de signalisation LSb, et l'entrée signal de la bascule 64 est reliée à la liaison de rebouclage LR de l'émetteur de signalisation de la station. L'entrée horloge de chacune des trois bascules est reliée à la sortie d'un inverseur 65 qui reçoit en entrée un signal Wd correspondant au signal W décalé en arrière d'un quart de période.

Les bascules fonctionnant sur le front montant du signal W̄dd délivré par l'inverseur 65, les différents bits de la liaison signalisation sont pratiquement pris en compte à un temps correspond au dernier quart du temps correspondant à chaque bit. En sortie du multiplexeur les différents bits sont pris en compte soit par le signal W, soit pour certains bits spécifiques au temps suivant celui qui leur est affecté. Ainsi le bit de réservation émis au temps ti.W4 par une station i est pris en compte au temps ti.W5. La sortie de chaque bascule est reliée à une entrée du multiplexeur MX1.

La sortie du multiplexeur MX1 est reliée à une entrée d'une porte OU exclusif 66 dont une autre entrée est relié au fil 39 venant de la sortie de la bascule 37 de l'émetteur de signalisation (figure 3). La sortie de la porte OU exclusif est reliée à une entrée d'une porte ET 67 dont une autre entrée reçoit le signal tn.W5. Ainsi un bit de réservation émis par la station n est présent sur la porte OU exclusif 66 de la station n, d'une part par l'intermédiaire du circuit récepteur de signalisation 61, et d'autre part par le fil 39; si le bit de réservation est présent sur les deux entrées de la porte OU exclusif 66, la sortie de cette porte est à zéro; si le bit de réservation est présent sur une seule entrée, la sortie de la porte OU exclusif 66 à la valeur 1 et cette valeur est prise en compte en tn.W5 par la porte ET 67 dont la sortie est reliée à l'entrée d'un point mémoire 68. La sortie du point mémoire est reliée d'une part à l'unité de commande par le fil 69 et d'autre part à l'entrée de remise à zéro de la bascule 37 de l'émetteur de signalisation (figure 3) par le fil 38; le point mémoire 68 délivre un signal faute de bit de réservation, et il est remis à zéro par l'unité de commande à laquelle l'entrée de remise à zéro du point mémoire 68 est reliée par le fil 70.

La sortie du multiplexeur MX1 est également reliée à une entrée signal d'une bascule 75 dont l'entrée horloge reçoit le signal tn.W7. Cette bascule 75 délivre donc un signal lorsque la station n reçoit un bit d'appel émis par une station appelante p au temps tn.W6. La sortie de la bascule 75 est reliée, par le fil 44 à l'entrée de remise à zéro du point mémoire 42 du récepteur de signalisation (figure 3). La sortie de la bascule 75 est également reliée, d'une part directement à une entrée d'une porte ET 76 et d'autre part à travers un inverseur 79 à une entrée d'une porte ET 77 et à travers un inverseur 80 à une entrée d'une porte ET 78. La porte ET 76 reçoit sur une autre entrée le signal tp.W2 corespondant au temps W2 de l'intervalle de temps tp affecté à une station appelante; la sortie de la porte ET 76 est reliée à une entrée signal d'un point mémoire 81 qui délivre un signal "créneau de temps à la réception" CRRE et est reliée par un fil 83 au récepteur du module émetteur récepteur d'informations représenté figure 5.

La porte ET 77 reçoit sur une autre entrée le signal tp.W3 et sa sortie est reliée à une entrée de remise à zéro du point mémoire 81. La porte ET 78 reçoit sur une entrée le signal tp.W3 et a une autre entrée reliée à la sortie du point mémoire 81; sa sortie est reliée à une entrée signal d'un point mémoire 82 recevant sur son entrée de remise à zéro le signal tp.W4. La sortie du point mémoire 82 délivre un signal "créneau de temps bien reçu" CRBR et est relié à l'émetteur d'informations représenté figure 5, par un fil 84.

Le multiplexeur MX1 est encore relié en sortie à une entrée d'une porte ET 90 recevant sur une autre entrée le signal W5; la sortie de la porte ET 90 est reliée à une entrée signal d'un point mémoire 91 recevant sur son entrée de remise à zéro le signal tn.W7. La sortie du point mémoire 91 est reliée d'une part à l'inverseur 29 de l'émetteur de signalisation (figure 3) par le fil 30, et d'autre part à un circuit numéro de station appelante 93 par le fil 92. Le point mémoire 91 délivre un signal de réservation lorsqu'un bit de réservation a été émis, sur la liaison de signalisation, par une autre station.

Le multiplexeur MX1 est aussi relié, en sortie, à une entrée signal d'un registre 94 à 8 bits dont l'entrée horloge reçoit le signal W; le registre est à sortie en parallèle et est relié à l'entrée d'une porte ET 95 dont une autre entrée reçoit le signal W1. La sortie de la porte ET 95 est reliée à l'entrée d'une mémoire d'états 96 d'une capacité de 32 mots de 8 bits. La mémoire d'états 96 est adressée par un circuit d'adressage 97 comprenant deux portes ET 98, 99 et une porte OU 100. La porte ET 98 reçoit sur une entrée les signaux T1 à T5 donnant successivement les numéros des 32 stations et sur une autre entrée le signal W1; la porte ET 99 a une entrée reliée par le fil 15 à la sortie du registre 11 de la figure 3 qui délivre le numéro de la station appelée par la station n, et reçoit sur une autre entrée le signal W1; chaque porte ET 98, 99 est reliée en sortie à une entrée de la porte OU 100 dont la sortie est reliée à l'entrée d'adressage de la mémoire d'états 96. Le circuit d'adressage 97 permet, par la porte ET 98, un adressage temporel de la mémoire d'états, cet adressage se faisant par les numéros des intervalles de temps affectés aux stations; un tel adressage permet l'écriture, dans la mémoire d'états, des informations contenues dans le registre 94; la porte ET 99 permet un adressage spatial de la mémoire à la lecture, c'est-à-dire la lecture du mot de celle-ci correspondant à une station appelée. Le registre 94 reçoit en effet, pour chaque station, les informations émises par chacune d'elles sur la liaison de signalisation lors de l'intervalle de temps qui lui est affecté. Ainsi après transfert dans la mémoire d'états 96 celle-ci contient l'état de toutes les stations, état donné pour chaque station par les quatre bits d'états, B1, B2, B3, B4, le bit de réservation R, le bit de veille V et le bit d'appel A reçu éventuellement par la station. Si la station n désire appeler une station m, elle vient lire dans sa mémoire d'états le mot correspondant à la station m afin d'en connaître sa disponibilité.

La mémoire d'états 96 est reliée en sortie d'une part à une entrée d'un comparateur 101 par un fil 102 acheminant les quatre bits d'états d'une station, et d'autre part à une entrée d'une porte ET 103 par un fil 104 acheminant le bit de veille, le bit de réservation, le bit d'appel reçu ainsi que le bit de test d'une station. Une autre entrée du comparateur 101 est reliée à une sortie d'un registre de priorité 111 à quatre bits relié en entrée à la sortie d'une porte ET 112. Une entrée de la porte ET 112 est reliée au bus de données BD et une autre entrée est reliée à l'unité de commande par un fil 113 qui achemine un signal autorisant l'écriture dans le registre de priorité 111. La sortie du comparateur 101 est reliée à une autre entrée de la porte ET 103 dont la sortie est reliée par le fil 31 à une entrée de la porte ET 28 de l'émetteur de signalisation, figure 3.

Si la station n appelle une station m les quatre bits du code de priorité du message à émettre par la station 4 sont chargés dans le registre de priorité 111; la station n vient lire dans sa mémoire d'états 96 les quatre bits d'états de la station appelée m. Si la priorité du message à émettre est compatible avec l'état de la station appelée, c'est-à-dire si l'état de la station appelée m est supérieur ou égal au code de priorité du message à émettre, le comparateur 101 de la station n délivre un signal à la porte ET 103, et la présence du bit de veille de la station appelée à la lecture du mot de la mémoire d'états 96 correspondant à la station appelée m, valide la porte ET 103 qui délivre sur le fil 31 un signal de veille résultante. Ce signal de veille résultante est appliqué à la porte ET 28 de l'émetteur de signalisation, figure 3, et est une des conditions de génération du signal de réservation par la bascule 37, pour émission sur la liaison de signalisation du bit de réservation R.

Le circuit "numéro de station appelante" 93 permet de connaître le numéro de la station appelante p et de délivrer un signal correspondant à l'intervalle de temps tp affecté à la station appelante. A cet effet une porte ET 105 a une entré reliée à la sorite du point mémoire 91 qui délivre donc un signal de réservation dès qu'un bit de réservation a été émis par une station; une autre entrée de la porte ET 105 est reliée, par le fil 46, à la sortie du point mémoire 42 (figure 3) qui délivre un signal veille à l'émission lorsque la station n n'émet pas et n'est pas appelée. Si la station n est appelée le point mémoire 42 est remis à zéro par le signal délivré par le point mémoire 75 de la figure 4, dès réception du bit d'appel ce qui interdit toute émission de la station n. La sortie de la porte ET 105 est reliée à une entré d'une porte ET 106 qui reçoit sur une autre entrée les signaux T1 à T5. La sortie de la porte ET 106 est reliée à un registre 107, à cinq bits. La porte ET 106 est donc validée par la porte ET 105 sur le front montant du signal délivré par la porte ET 105, c'est-à-dire lorsqu'une station appelante émet un bit de réservation et que la station n est en veille émission. La sortie du registre 107 est reliée à une entrée d'un comparateur 108 qui reçoit sur une autre entré les signaux T1 à T5; le comparateur délivre en sortie un signal tp correspondant à l'intervalle de temps affecté à la station appelante. La sortie du registre 107 est également reliée à une entrée d'une porte ET 109 ayant une autre entrée reliée par un fil 110 à l'unité de commande de laquelle elle reçoit un signal de lecture du registre 107; la sortie de la porte ET 109 est reliée au bus de données BD.

Dans la station n la bascule 75 figure 4, reçoit dans son intervalle de temps tn, le bit d'appel émis par la station appelante au temps tn.W6, de sorte que seule la bascule 75 de la station appelée n délivre un signal à partir duquel le point mémoire 81 délivre un signal CRRE créneau de temps à la réception, et le point mémoire 82 délivre un signal "créneau de temps bien reçu" CRBR juste à la fin du créneau de temps à la réception CRRE (figure 7) qui permet d'accuser réception (bonne ou mauvaise) du message reçu. Dans les autres stations le bit d'appel est sans effet sur la bascule 75 et par conséquent sur les points mémoires 81 et 82. De même seul le point mémoire 42, figure 3 de la station appelée n est mis à zéro par le signal délivré par la bascule 75 de la station n. Dans toutes les stations le numéro contenu dans le registre 107 et transmis par la porte ET 109 à l'unité de commande par le bus de données BD est le numéro de la station appelante qui appelle la station n. Dans chacune des stations le bit de réservation émis par la station appelante p est pris en compte en W5 et le point mémoire 91 délivre un signal de valeur 1 jusqu'à ce que dans chaque station le signal tn.W7 de celle-ci le remette à zéro. Le signal de réservation délivré par le point mémoire 91 sur le fil 30 interdit également dans les stations l'émission d'un bit de réservation, puisque ce signal de valeur 1 est appliqué à une entrée de la porte ET 28 (figure 3) après inversion et que la bascule 37, figure 3 est ainsi bloquée, de sorte qu'elle ne délivre pas de signal au temps tn.W3 qui est affecté à la station considérée le point mémoire 91 n'étant remis à zéro qu'au temps tn.W7 de cette station.

La figure 5 représente un récepteur d'informations 140 d'un module émetteur-récepteur d'informations d'une station.

Le récepteur d'informations 140 comprend en entrée deux bascules 142, 143, reliées en entrée aux liaisons d'informations LIa et LIb, respectivement. Un inverseur 144 reçoit en entrée le signal Wd et sa sortie est reliée à l'entrée horloge des deux bascules. La sortie de chaque bascule est reliée à une entrée, respectivement, d'un multiplexeur MX2 dont la sortie est reliée à une entrée série d'un registre 145, à huit bits, dont l'entrée horloge reçoit le signal W, à un diviseur par deux 146 dont la sortie est reliée par un fil 147 à l'émetteur d'informations et à un fil 121 relié à l'émetteur d'informations, figure 6.

Le diviseur par deux calcule l'imparité sur l'ensemble des bits du message reçu, y compris le bit d'imparité émis, et délivre un signal de valeur 1 lorsque l'imparité calculée est correcte. La sortie du diviseur par deux 146 est également reliée directement à une entrée signal d'une bascule 157 fin d'échange en réception et à travers un inverseur 158 à l'entrée signal d'une bascule 159, mauvaise imparité en réception. Une porte ET 160 a une entrée reliée au fil 84 duquel elle reçoit un signal CRBR, créneau de temps bien reçu, et une autre entrée reliée à un inverseur 161 qui reçoit en entrée le signal Wd; la sortie de la porte ET 160 est reliée à l'entrée horloge de chacune des bascules 157, 159. La bascule 157 est reliée en sortie par un fil 162 à l'unité de commande et délivre un signal FECR, fin d'échange en réception; son entrée de remise à zéro RZ est reliée par un fil 163 à l'unité de commande. La bascule 159 est reliée en sortie par un fil 164 à l'unité de commande et délivre un signal MIR, mauvaise imparité en réception; son entrée de remise à zéro RZ est reliée par un fil 165 à l'unité de commande. A la fin d'un message, la bascule 82, figure 4, de la station appelée délivre un signal CRBR au temps tp.W3; si l'imparité calculée est correcte à la réception, dans la station appelée, la bascule 157 de cette station délivre un signal FECR; si l'imparité est mauvaise, c'est la bascule 159 qui délivre un signal mauvaise imparité en réception.

La sortie parallèle du registre 145 est reliée à une entrée d'une porte ET 148 dont une autre entrée est reliée à la sortie d'une porte ET 149 ayant une entrée reliée par le fil 83 à la sortie du point mémoire 81 du récepteur de signalisation, figure 4, qui délivre un signal "créneau de temps à la réception" CRRE; la porte ET 149 reçoit le signal W1 sur une autre entrée. La sortie de la porte ET 148 est reliée à l'entrée d'une mémoire de réception 150 d'une capacité de 2048 octets, adressée par un circuit d'adressage 151; ce circuit d'adressage est constitué par une porte OU 152, un compteur 153 et une porte ET 154. La porte ET 154 a une entrée reliée au fil 83 et reçoit le signal W1 sur une autre entrée; sa sortie est reliée à l'entrée horloge du compteur 153 dont la sortie est reliée à une entrée de la porte OU 152, une autre entrée de la porte OU 152 étant reliée au bus d'adresses BA; la sortie de la porte OU 152 est reliée à l'entrée adressage de la mémoire de réception 150. Le compteur 153 permet l'adressage temporel de la mémoire de réception à l'écriture, lors de la réception d'un message, et le bus d'adresses BA permet la lecture de la mémoire de réception par l'unité de commande afin de prendre connaissance du message reçu; la sortie de la mémoire de réception 150 est reliée à une entrée d'une porte ET 155 dont une autre entrée est reliée par un fil 156 à l'unité de commande et en reçoit un signal de lecture de la mémoire de réception; la sortie de la porte ET 155 est reliée au bus de données BD.

La figure 6 représente l'émetteur d'informations 141 qui comporte une mémoire d'émission 170, d'une capacité de 2048 octets, reliée en entrée à la sortie d'une porte ET 171 ayant une entrée reliée au bus de données BD et une autre entrée reliée par un fil 172 à l'unité de commande. Un circuit d'adressage 173 de la mémoire d'émission comprend une porte ET 174 un inverseur 175, une porte OU 176, un compteur 177, et une porte ET 178. La porte ET 174 a une entrée reliée au bus d'adresses BA et une autre entrée reliée au fil 54 à travers un inverseur 175, le fil 54 provenant de la sortie de la bascule 8, figure 3, qui délivre le signal "créneau de temps à l'émission" CREM suite à l'émission d'un bit de réservation par la station; la sortie de la porte ET 174 est reliée à une entrée d'une porte OU 176 dont la sortie est reliée à l'entrée adressage de la mémoire d'émission; une autre entrée de la porte OU 176 est reliée à la sortie d'un compteur 177 dont l'entrée horloge est reliée à la sortie d'une porte ET 178; une entrée de la porte ET 178 est reliée au fil 54 et une autre entrée de la porte ET 178 reçoit le signal W1.

La sortie de la mémoire d'émission 170 est reliée à une entrée d'une porte ET 179 ayant une autre entrée reliée à la sortie d'une porte ET 180; cette porte ET 180 a une entrée reliée au fil 54 et reçoit sur une autre entrée le signal W8. La sortie de la porte ET 179 est reliée à une entrée d'un registre 181, à huit bits. Le circuit d'adressage 173 permet un adressage spatial de la mémoire d'émission par l'unité de commande via le bus d'adresse BA, et un adressage temporel par le compteur 177 qui reçoit un signal d'horloge à chaque instant W1 pendant la durée du signal "créneau de temps à l'émission" CREM (fil 54) signal dont la durée est fonction du nombre de trames à émettre (figure 3). Le compteur 177 est donc incrémenté tous les temps W1 et adresse la mémoire d'émission 170, le transfert dans le registre 181 ayant lieu à chaque instant W8 pendant la durée du signal "créneau de temps à l'émission" CREM (fil 54), le premier transfert ayant lieu à l'instant W8 qui précède la première incrémentation du compteur. L'entrée horloge du registre 181 reçoit le signal W qui permet un décalage série du registre à la lecture. Le registre 181 est relié en sortie à un circuit d'émission 182 lui même relié en sortie à un circuit de sortie 183 connecté en sortie aux liaisons d'informations LIa et LIb. Le circuit d'émission 182 comporte trois portes ET 184, 185, 186 reliées en sortie à une porte OU 187, un diviseur par deux 188, et une bascule 189 dont l'entrée signal est reliée à la sortie de la porte OU 187 et dont l'entrée horloge reçoit le signal W. La porte ET 184 a une entrée reliée à la sortie du registre 181 et une autre entrée reliée au fil 54 (CREM). Le diviseur par deux 188 est relié en entrée à la sortie du registre 181 et en sortie à une entrée de la porte ET 185 dont une autre entrée est reliée à la sortie d'une porte ET 190 qui délivre un signal CRIP, créneau de temps d'imparité. La porte ET 190 a une entrée reliée au fil 58 provenant de la bascule 55, figure 3, et reçoit sur une autre entrée le signal tn.W1. Le signal CRIP est représenté figure 7; il apparaît donc à la suite de la dernière trame émise. Le diviseur par deux calcule l'imparité du message délivré par le registre 181 et sa sortie a la valeur 1 si le message émis est constitué d'un nombre pair de 1 et la valeur 0 dans le cas contraire. La porte ET 186 a une entrée reliée par le fil 147 au diviseur par deux 146, figure 5, et une autre entrée reliée au fil 84 venant du point mémoire 82, figure 4, qui délivre un signal CRBR créneau de temps bien reçu; dans une station réceptrice, donc appelée, le diviseur par deux 146 calcule donc l'imparité de l'ensemble message plus bit d'imparité émis par une station émettrice, et le résultat est transmis par la porte ET 186 au temps tp.W3 correspondant au signal créneau de temps bien reçu, CRBR.

La bascule 189 fonctionnant au rythme W transmet au circuit de sortie 183 les signaux provenant des portes ET 184, 185, 186; dans la station émettrice n le bit d'imparité est donc émis dans l'octet qui suit la dernière trame du message émis, c'est-à-dire au temps tn.W1, et dans la station réceptrice (station appelée) la réponse bien reçu provenant du diviseur par deux 146 est émise dans ce même octet au temps tn.W3.

Le circuit de sortie 183 est constitué de trois portes ET 191, 192, 193 et d'une porte OU 194. La porte ET 191 a une entrée reliée à la sortie de la bascule 189 et une autre entrée reliée à la sortie de la porte ET 193; la porte ET 192 a une entrée reliée à la sortie de la bascule 189 et une autre entrée reliée à la sortie de la porte ET 193. Les portes ET 191 et 192 sont reliées en sortie aux liaisons d'informations Lla et Llb respectivement. La porte OU 194 a une entrée reliée au fil 54, signal CREM provenant de la bascule 8 figure 3, une entrée reliée à la sortie de la porte ET 190, et une autre entrée reliée au fil 84, signal CRBR provenant de la bascule 82 figure 4. La sortie de la porte OU 194 est reliée d'une part à une entrée d'un circuit chien de garde 169 et d'autre part à une entrée de la porte ET 193. La porte ET 193 a une entrée reliée à l'unité de commande par un fil 195 et en reçoit un signal de validation à l'émission, et une autre entrée reliée, à travers un inverseur 197, à la sortie d'une porte OU 198 ayant une entrée reliée à la sortie du circuit chien de garde 169 constitué par un oscillateur 201, une porte ET 196, un compteur 199 et un inverseur 200. Le compteur 199, est relié en entrée à la sortie de la porte ET 196; la sortie du bit de poids fort du compteur est reliée d'une part à une entrée de la porte OU 198 et d'autre part, à une entrée de la porte ET 196 via l'inverseur 200, une autre entrée de la porte ET 196 étant reliée à la sortie de la porte ET 194. L'oscillateur 201 est relié à une autre entrée de la porte ET 196. Le circuit chien de garde 169 est donc armé, dans la station appelante, au début de l'émission par le signal venant de la porte OU 194; le temps de comptage du compteur 199 est de 8 millesecondes, correspondant à un message de 64 trames. Si donc il y a débordement du circuit chien de garde 169 celui-ci délivre un signal de faute qui bloque l'émission sur la liaison d'informations. Une autre entrée de la porte OU 198 est reliée au fil 138, signal F1PS, provenant de la bascule 60 figure 3.

L'émission sur la liaison d'informations pendant les créneaux de temps CREM (fil 54), CRIP, et CRBR (fil 84) est conditionnée par un signal de validation à l'émission délivré par l'unité de commande (fil 195); d'autre part une faute se traduisant par une émission supérieure à 8 millesecondes entraîne un débordement du circuit chien de garde 169 qui bloque le circuit de sortie 183.

Une bascule 120 fin d'échange en émission a son entrée signal reliée au fil 121 provenant de la sortie du multiplexeur MX2 du récepteur d'informations, figure 5; une bascule 122, émission non bien reçue en émission (NBRE) a son entrée signal reliée au fil 121 par un inverseur 123; une porte ET 124 a une entrée reliée au fil 58 et reçoit le signal W4 sur une autre entrée, sa sortie étant reliée à l'entrée horloge de chacune des bascules 120, 122. La sortie de la bascule 120 est reliée à l'unité de commande par un fil 125 et délivre un signal FECE, fin d'échange en émission; son entrée de remise à zéro RZ est reliée par un fil 126 à l'unité de commande. La sortie de la bascule 122 est reliée à l'unité de commande par un fil 127 et délivre un signal NBRE, émission non bien reçue en émission; son entrée de remise à zéro RZ est reliée par un fil 128 à l'unité de commande.

Une station appelée élabore à la suite du message qu'elle a reçu, un signal CRBR par le point mémoire 82 figure 4; ce signal permet l'envoi par la station appelée et sur la liaison d'informations, du bit bien reçu si l'imparité contrôlée à la réception par le diviseur par deux 146 est correcte; la station appelante reçoit ce bit qui est transmis par le fil 121 aux bascules 120, 122. Si le bit bien reçu émis par la station appelée a la valeur 1, ce qui signifie que la réception du message a été bonne, la bascule 120 délivre un signal FECE fin d'échange en émission; si le bit bien reçu émis par la station appelée à la valeur 0, ce qui signifie que la réception du message n'est pas bonne, c'est la bascule 122 qui délivre un signal NBRE, non bien reçu en émission, et la station appelante peut décider de réémettre son message.

- La figure 7 représente différents signaux, en a, b, c, d, e, f, g, h, i,

a) représente le signal W

b) représente le signal Wd qui est le signal W décalé d'un quart de période,

c) représente les intervalles de temps élémentaires qui constituent chaque intervalle de temps t0 à t31,

d) représente les intervalles de temps tn-1 et tn au départ de l'émission d'un message par la station appelante n, puis les intervalles de temps tn-1 et tn en fin d'émission,

e) représente le signal CREM, créneau de temps à l'émission,

f) représente le signal CREMR, créneau de temps en fin d'émission,

g) représente le signal CRIP, créneau de temps pour émission du bit d'imparité,

h) représente le signal CRRE, créneau de temps à la réception, ce signal étant élaboré dans la station appelée,

i) représente le signal CRBR, créneau de temps bien reçu, ce signal étant élaboré dans la station appelée, et permet l'envoi du signal bien reçu suite au contrôle de l'imparité en réception.

Les signaux h et i sont delivrés par les bascules 81, 82, respectivement (figure 4). Ils sont délivrés dans l'intervalle de temps tp qui correspond à l'intervalle de temps de la station appelante. Si donc on suppose que la station appelante est la station n, ce qui est le cas de la figure 7, cet intervalle de temps tp, dans une station appelée m correspond à l'intervalle de temps tn; dans la figure 4 et pour la station appelée m, les temps tn.W5, tn.W7, etc...... sont alors ceux de la station appelée m, c'est-à-dire, tm.W5, tm.W7, etc.....

On va décrire à présent, à titre d'exemple un échange de messages entre 2 stations, en supposant que la station 3 appelle la station 9 les intervalles de temps affectés à chacune des stations étant t3 et t9, et que la longueur du message est de 15 trames.

Dans la station 3, l'unité de commande charge le décompteur 4, figure 3, du nombre 15 de trames relatif au message à émettre, délivre au circuit numéro de station appelée 16 le numéro 9 et affiche dans le registre de priorité 111, figure 4, la priorité du message à émettre. La station 3 lit dans la mémoire d'états 96 les bits d'état et le bit de veille de la station 9, ce dernier bit précisant la disponibilité de la station 9. Si le bit de veille a la valeur 1, si la liaison de signalisation LSa, LSb est libre, ce qui signifie qu'aucun bit de réservation n'a été émis par une autre station, et si la priorité du message à émettre est compatible avec l'état de la station 9, la station 3 émet un bit de réservation, en t3.W3, ce bit étant élaboré à partir du signal délivré par la bascule 37, et émis ensuite via la porte ET 40 et la bascule 48. L'envoi de ce bit de réservation permet de réserver la liaison de signalisation pendant les 125 microsecondes qui suivent son émission. La réception de ce bit marque, dans chaque station, l'état d'occupation de la liaison de signalisation. Dans toutes les stations, et dans la station 9 en particulier, la réception du bit de réservation fait monter le point mémoire 91 et le circuit 93 délivre le numéro de la station appelante, donc le numéro 3, au bus de données BD et élabore l'intervalle de temps tp correspondant à la station 3 appelante, c'està-dire l'intervalle de temps t3. Dans la station appelante 3, le bit de réservation valide l'envoi, porte ET 41, d'un bit d'appel au temps tm.W6, c'est-à-dire au temps t9.W6 affecté à la station appelée qui est la station 9; ce bit d'appel invite la station 9 à se mettre en réception à partir du premier intervalle de temps t3 qui suit l'émission du bit d'appel. Dans la station appelée 9, après réception du bit d'appel, la bascule 81 délivre le signal CRRE, créneau de temps à la réception, à partir du temps tp.W2, c'est-à-dire t3.W2, puisque pour la station 9 la station appelante p est la station 3. L'échange sur la liaison d'informations commence dès le début de l'intervalle de temps t3 qui suit l'envoi du bit de réservation soit approximativement 125 microsecondes après cet envoi.

La bascule 8 de la station 3 délivre un signal CREM, créneau de temps à l'émission au temps t2.W8 lors du premier intervalle de temps t2 qui suit l'envoi du bit de réservation. Ce signal valide, dans l'émetteur d'informations 141 figure 6, la porte ET 180 qui autorise le chargement du registre 181 en t2.W8 et tous les W8 suivants pendant la durée du signal CREM; ce registre à décalage est commandé par le signal W, de même que la bascule 189, de sorte que l'émission du premier bit du message a bien lieu en t3.W1. Le message est alors émis sans interruption.

Le nombre de trames à émettre est décrémenté d'une unité dans le décompteur 4 par action du signal CREM en t3.W1.

La station 3, qui est la station appelante, émet, 125 microsecondes après l'envoi du premier bit de réservation, un nouveau bit de réservation en t3.W4 pour réserver la liaison de signalisation pendant à nouveau 125 microsecondes. Un autre bit d'appel est également émis dans les mêmes conditions que précédemment, afin de maintenir la station appelée 9 en réception. L'émission des bits de réservation et d'appel se répétera autant de fois qu'il y a de trames à émettre, c'est-à-dire 15 dans l'exemple choisi. Au début de la dernière trame, c'est-à-dire la trame 15, donc au temps t3.W1, le décompteur 4 passe à zéro et le décodeur 10 délivre un signal de valeur 1, ce qui bloque la porte ET 35; la sortie de la bascule 37 repasse à zéro de sorte qu'il n'y a plus émission du bit de réservation ni du bit d'appel et que le signal CREM retombe à zéro en fin de trame, au temps t2.W8. A la suite du message la station 3 émet le bit d'imparité calculé, la porte ET 185 étant validée par la porte ET 190, et la bascule 189 étant activée par le signal W; l'émission du bit d'imparité a lieu en t3.W1. Dans la station réceptrice 9, le diviseur par deux 146 contrôle l'imparité pour l'ensemble du message et du bit d'imparité émis par la station 3. Le bit bien reçu ainsi élaboré est émis par la station 9 via la porte ET 186 validée par le signal CRBR qui apparaît au temps tp.W3; c'est-à-dire t3.W3. La station émettrice reçoit le bit bien reçu émis par la station 9, et selon la valeur de ce bit, c'est soit la bascule 120, fin d'échange en émission, soit la bascule 122, non bien reçu en émission qui est activée; l'unité de commande de la station 3, émettrice, est donc informée de la bonne ou de la mauvaise réception du message.

Dans l'intervalle de temps affecté à chaque station, l'ordre des différents bits a été donné à titre d'exemple et les différents instants tn.W1, tn.W2,.........tn.W8 relatifs à chaque bit sont indiqués dans les figures; si l'on adopte une autre répartition des bits dans l'intervalle de temps il faut utiliser les signaux de temps corespondants à chaque bit, mais on ne s'écarte par pour autant de l'invention. Ainsi par exemple on peut émettre les quatre bits d'états en tn.W1, tn.W2, tn.W3, tn.W4, et le bit de réservation en tn.W5; l'homme de l'art, lorsqu'il adopte une répartition doit seulement tenir compte des contraintes inhérentes aux circuits qu'il utilise, c'est-à-dire vérifier essentiellement que les temps de montées des signaux de temps tels que W, W1, W2....W8, ne sont pas incompatibles avec la répartion choisie, pour la prise en compte de certains signaux; mais ceci est bien connu de l'homme de l'art.

## Revendications

1. Dispositif d'échange de messages codés entre stations reliées entre elles par une liaison de signalisation (LS) et une liaison d'informations (LI), chaque station étant reliée à une base de temps générale et comportant une unité de commande (1) et un coupleur (C) relié d'une part à l'unité de commande par un bus d'adresses (BA) et un bus de données (BD) et d'autre part aux liaisons de signalisation et d'informations qui sont des liaisons multiplex série synchrones de la base de temps, un intervalle de temps dans une trame de signalisation étant affectée à chaque station, le coupleur ayant des moyens (18, 26) pour émettre son état dans son intervalle de temps, un circuit récepteur de signalisation (61), une mémoire d'état des stations (96), une mémoire de réception (150) des messages, une mémoire d'émission (170) des messages, un circuit de sortie (183) relié à la liaison d'informations, un circuit émetteur de signalisation (49), et des moyens (93) pour élaborer un signal (tp) correspondant à l'intervalle de temps d'une station appelante, les échanges de messages codés entre stations se faisant par messages transitant sur la liaison d'informations dans des trames d'informations, chaque trame d'informations ayant la même durée qu'une trame de signalisation, caractérisé par le fait que les messages à émettre ont des longueurs différentes et sont contenus dans un nombre entier de trames d'informations, et que le coupleur comporte également:

- des moyens (4) pour afficher et décompter le nombre de trames d'informations du message à émettre et des moyens (10) pour délivrer un signal lorsque le nombre de trames d'informations à émettre est égal à zéro,

- des moyens (37) pour élaborer dans son intervalle de temps un signal de réservation d'une durée d'une trame d'informations, et des moyens (40) pour émettre, à partir du signal de réservation et dans son intervalle de temps, un bit de réservation sur la liaison de signalisation (LS),

- des moyens (16) pour élaborer un signal (tm) correspondant à l'intervalle de temps d'une station appelée, et des moyens (41) pour émettre sur la liaison de signalisation un bit d'appel dans l'intervalle de temps de la station appelée,

- des moyens (8, 9) pour élaborer à la fin de la trame de signalisation dans laquelle le signal de réservation à été émis, un signal (CREM) créneau de temps à l'émission pour d'une part activer par des moyens d'activation (35) et tant que le nombre de trames d'informations à émettre n'est pas nul, les moyens (37) d'élaboration du signal de réservation afin d'émettre à nouveau un bit de réservation et un bit d'appel, et pour d'autre part activer les moyens de décomptage (4) des moyens d'adressage (173) de la mémoire d'émission (170) et un circuit d'émission du message (182), et

- des moyens (55, 56) pour élaborer un signal (CREMR), créneau de temps en fin d'émission, à partir du signal (CREM) créneau de temps à l'émission, et activer dans son intervalle de temps le circuit d'émission (182) pour émission d'un bit d'imparité à la suite du message.

2. Dispositif d'échange de messages selon la revendication 1, caractérisé par le fait que la mémoire d'états des stations (96) contient également pour chaque station l'état d'un bit de veille indiquant si la station est disponible, et que le coupleur comporte également des moyens (111) pour afficher la priorité d'un message à émettre, des moyens (101) pour comparer la priorité avec l'état de la station appelée état lu dans la mémoire (96) des états des stations, des moyens (103) pour délivrer un signal de veille résultante lorsque la comparaison est bonne et lorsque l'état du bit de veille de la station appelée est bon, des moyens (90, 91) pour indiquer si la liaison de signalisation est libre, et des moyens (28) pour délivrer un signal d'activation aux moyens (37) d'élaboration du signal de réservation lorsque le nombre de trames d'informations du message délivré par les moyens de décomptage (4) n'est pas nul, lorsque le signal de veille résultant est délivré et lorsque la liaison de signalisation est libre.

3. Dispositif d'échange de messages selon la revendication 1, caractérisé par le fait que chaque coupleur comporte également des moyens (75) pour recevoir un bit d'appel dans son intervalle de temps, des moyens (42) pour délivrer un signal de veille tant que la station n'a pas reçu de bit d'appel, des moyens (81) pour délivrer un signal (CRRE) créneau de temps à la réception, à partir de l'intervalle de temps d'une station appelante, ledit signal (CRRE) activant un circuit d'adressage (151) de la mémoire de réception et autorisant l'écriture dans la mémoire de réception.

4. Dispositif d'échange de messages selon la revendication 1, caractérisé par le fait que le coupleur comporte un circuit chien de garde (169) qui délivre un signal pour bloquer le circuit d'émission (183) sur la liaison de signalisation lorsque l'émission déborde un temps prédéterminé, correspondant au nombre maximum de trames d'informations que peut comporter un message.

## Patentansprüche

1. Vorrichtung zum Austausch kodierter Nachrichten zwischen Stationen, die miteinander über einen Signalisationskanal (LS) und über einen Informationskanal (LI) verbunden sind, wobei jede Station an eine allgemeine Zeitbasis angeschlossen ist und eine Steuereinheit (1) sowie einen Koppler (C) besitzt, der einerseits über eine Adressenschiene (BA) und eine Datenschiene (BD) mit der Steuereinheit (1) und andererseits mit dem Signalisations- und dem Informationskanal verbunden ist, die beide mit der Zeitbasis synchrone Multiplexkanäle sind, wobei ein Zeitintervall in einem Signalisationsrahmen jeder Station zugeordnet ist und der Koppler Mittel (18, 26) zur Aussendung seines Zustands in seinem Zeitintervall, einen Kreis (61) zum Empfang der Signalisation, einen Speicher (96) zur Speicherung des Zustands der Stationen, einen Nachrichtenempfangsspeicher (150), einen Nachrichtensendespeicher (170), einen Ausgangskreis (183), der an den Informationskanal angeschlossen ist, einen Signalisationssendekreis (49) und Mittel (93) zur Bildung eines Signals (tp) entsprechend dem Zeitintervall einer rufenden Station aufweist, wobei der Austausch kodierter Nachrichten zwischen Stationen durch Nachrichten erfolgt, die über die Informationskanäle in Informationsrahmen verlaufen, und wobei jeder dieser Informationsrahmen dieselbe Dauer wie ein Signalisationsrahmen besitzt, dadurch gekennzeichnet, daß die auszusendenden Nachrichten unterschiedliche Längen besitzen und in einer ganzzahligen Anzahl von Informationsrahmen enthalten sind, und daß der Koppler außerdem aufweist:

- Mittel (4) zur Anzeige und zum Abzählen der Anzahl der auszusendenden Informationsrahmen der Nachricht und Mittel (10) zur Ausgabe eines Signals, wenn die Anzahl der auszusendenden Informationsrahmen null ist,

- Mittel (37) zur Bildung eines Reservationssignals einer Dauer eines Informationsrahmens in seinem Zeitintervall und Mittel (40) zur Aussendung eines Reservationsbits auf dem Signalisationskanal (LS) ausgehend vom Reservationssignal und in seinem Zeitintervall,

- Mittel (16) zur Bildung eines Signals (tm) entsprechend dem Zeitintervall einer gerufenen Station und Mittel (41) zur Aussendung eines Rufbits auf dem Signalisationskanal im Zeitintervall der gerufenen Station,

- Mittel (8, 9) zur Bildung eines Sende-Zeitfenstersignals (CREM) am Ende des Signalisationsrahmens, in dem das Reservationssignal ausgesandt wurde, um einerseits durch Aktivierungsmittel (35) und soweit die Anzahl der auszusendenden Informationsrahmen nicht null ist, die Mittel (37) zur Bildung des Reservationssignals zu aktivieren, so daß erneut ein Reservationsbit und ein Rufbit ausgesandt werden, und um andererseits die Abzählmittel (4) der Adressenmittel (173) des Sendespeichers (170) und einen Nachrichtensendekreis (182) zu aktivieren,

- und Mittel (55, 56), um ein Zeitfenstersignal (CREMR) am Sendeende ausgehend vom Sende-Zeitfenstersignal (CREM) bei der Sendung zu bilden und den Sendekreis (182) in seinem Zeitintervall zur Aussendung eines Unparitätsbits im Anschluß an die Nachricht zu aktivieren.

2. Vorrichtung zum Austausch von Nachrichten nach Anspruch 1, dadurch gekennzeichnet, daß der Zustandsspeicher (96) der Stationen außerdem für jede Station den Zustand eines Bereitschaftsbits enthält, das angibt, ob die Station verfügbar ist, und daß der Koppler außerdem Mittel (111) zur Anzeige der Priorität einer auszusendenden Nachricht, Mittel (101) zum Vergleich der Priorität mit dem Zustand der gerufenen Station, der im Stations-Zustandsspeicher (96) gespeichert ist, Mittel (103) zur Ausgabe eines resultierenden Bereitschaftssignals, wenn der Vergleich positiv ist und wenn der Zustand des Bereitschaftsbits der gerufenen Station gut ist, Mittel (90, 91) zur Angabe, ob der Signalisationskanal frei ist, und Mittel (28) aufweist, die ein Aktivierungssignal an die Mittel (37) zur Bildung des Reservationssignals abgibt, wenn die von den Zählmitteln (4) ausgegebene Anzahl von Informationsrahmen der Nachricht nicht null ist, wenn das resultierende Bereitschaftssignal ausgegeben ist und wenn der Signalisationskanal frei ist.

3. Vorrichtung zum Austausch von Nachrichten nach Anspruch 1, dadurch gekennzeichnet, daß jeder Koppler außerdem Mittel (75) zum Empfang eines Rufbits in seinem Zeitintervall, Mittel (42) zur Ausgabe eines Bereitschaftssignals, sofern die Station nicht ein Rufbit empfangen hat, Mittel (81) zur Ausgabe eines Empfangs-Zeitfenstersignals (CRRE) ausgehend vom Zeitintervall einer rufenden Station aufweist, wobei dieses Signal (CRRE) einen Adressierkreis (151) des Empfangsspeichers aktiviert und das Einschreiben in den Empfangsspeicher freigibt.

4. Vorrichtung zum Austausch von Nachrichten nach Anspruch 1, dadurch gekennzeichnet, daß der Koppler einen Überwachungskreis (169) aufweist, der ein Signal zur Blockierung des Sendekreises (183) auf dem Signalisationskanal ausgibt, wenn der Sendevorgang eine vorgegebene Zeit entsprechend einer maximal zulässigen Anzahl von Informationsrahmen einer Nachricht überschreitet.

**Claims**

1. A device for exchanging encoded messages between stations which are interconnected by a signalisation link (LS) and a data link (LI), each station being connected to a general time base and comprising a control unit (1) and a coupler (C) connected on the one hand to the control unit via an address bus (BA) and a data bus (BD) and on the other hand to the signalisation and information links constituted by series multiplex links synchroneous with the time base, a time slot in a signalisation frame being assigned to each station, the coupler comprising means (18, 26) for transmitting its status in its time slot, a signalisation receiver circuit (61), a station status memory (96), a message reception memory (150), a message transmitting memory (170), an output circuit (183) connected to the data link, a signalisation transmitting circuit (49) and means (93) for producing a signal (tp) corresponding to the time slot of a calling station, the exchanges of encoded messages between stations being realized by messages which transit on the data link in data frames, each data frame having the same duration as a signalisation frame, characterized in that the messages to be transmitted are of different lengths and are contained within an integer number of data frames, and that the coupler further comprises

- means (4) for displaying and decrementing the number of data frames in the message to be transmitted, and means (10) for producing a signal when the number of data frames to be transmitted is equal to zero,

- means (37) for producing in its time slot a reservation signal with a duration of one data frame, and means (40) for transmitting a reservation bit on the signalisation link (LS) in its time slot and according to the reservation signal,

- means (16) for producing a signal (tm) corresponding to the time slot of a called station, and means (41) for transmitting a call bit over the signalisation link in the time slot of the called station,

- means (8, 9) for producing, at the end of the signalisation frame in which the reservation signal has been transmitted, a transmission time crenel signal (CREM) in order to activate by activation means (35) the means (37) for producing the reservation signal as far as the number of data frames to be transmitted is not zero, in order to transmit again a reservation bit and a call bit, and in order to activate the decrementing means (4) in the addressing means (173) of the transmission memory (170) and a message sending circuit (182),

- and means (55, 56) for producing an end of transmission time crenel signal (CREMR) according to the transmission time crenel signal (CREM) and for activating the transmission circuit (182) in its time slot in order to transmit an imparity bit following to the message.

2. A message exchange device according to claim 1, characterized in that the station status memory (96) further stores for each station the state of a stand-by bit indicating if the station is available, and that the coupler further comprises means (111) for displaying the priority of a message to be transmitted, means (101) for comparing the priority with the status of the called station, status which is read from the station status memory (96), means (103) for producing a resultant stand-by signal when the comparison result is positive and when the status of the stand-by bit of the called station is positive, means (90, 91) for indicating if the signalisation link is available, and means (28) for delivering an activation signal to the means (37) for producing a reservation signal when the number of data frames of the message delivered by the decrementing means (4) is not zero, when the resultant stand-by signal is produced and when the signalisation link is available.

3. A message exchange device according to claim 1, characterized in that each coupler further comprises means (75) for receiving a call bit in its time slot, means (42) for producing a stand-by signal as long as the station has not received a call bit, means (81) for delivering a reception time crenel signal (CRRE) according to the time slot of a calling station, said signal (CRRE) activating an addressing circuit (151) of the reception memory and authorizing writing into the reception memory.

4. A message exchange device according to claim 1, characterized in that the coupler comprises a watch dog circuit (169) which delivers a signal for disabling the transmission circuit (183) in the signalisation link when the transmission time exceeds a predetermined duration corresponding to the maximum number of data frames that a message may comprise.

# FIG.1

# FIG.2

FIG.3

FIG.4

FIG.5

FIG.6

# FIG.7

a) w

b) wd

c)

d)

e) CREM

f) CREMR

g) CRIP

h) CRRE

i) CRBR

488ns

5  6      1  2  3  4  5  6  7  8

w7 | w8 | w1  w2  w3 ...... w4  w5  w6  w7 | w8 | w1  w2  w3  w4  w5  w6  w7 | w8

—tn-1—→ ←——tn—— ----- ——tn-1——→ ←——————tn——————→

0 120 495